# EUROPÄISCHE PATENTANMELDUNG

(11) **EP 0 615 685 A2**
(43) Veröffentlichungstag der Anmeldung: **21.09.1994**
(21) Anmeldenummer: 93890253.3
(22) Anmeldetag: 28.12.1993
(51) Int. Cl.: A01K 5/00

(54) **Fütterungsanlage für Schweine**

(30) Priorität: 18.03.1993 AT 537/93
(71) Anmelder: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(57) **Zusammenfassung**

Bei einer Fütterungsanlage für Schweine, mit einem einen Teil einer Abtrennung (8) zwischen den Aufenthaltsbereichen (1, 2) zweier getrennt zu haltender Tiergruppen bildenden, zweitürigen Fütterungskäfig (3), einer einem Futtertrog (7) zugeordneten Futterausgabevorrichtung und einer Steuereinrichtung, die die Futterausgabevorrichtung und vorzugsweise auch Türsperr- oder Betätigungseinrichtungen steuert, so daß ein im Fütterungskäfig (3) befindliches, zum Futterempfang berechtigtes Tier eine Futterration erhält, wobei eine durch den Käfig verlaufende und zwischen den Seitenwänden (4) verstellbare Längsabtrennung (12) die beiden Tiergruppen auch im Käfigbereich trennt und je nach Stellung jeweils einem Tier der einen oder anderen Tiergruppe den Zugang zum Futtertrogbereich freigibt, ist der jeweils nur ein einziges Tier einer Tiergruppe aufnehmende Fütterungskäfig (3) als Durchlaufkäfig ausgebildet, der einen geraden Durchlaufweg zwischen je einer einzigen Ein- und Auslaßtür (5, 6) bestimmt. An den Fütterungskäfig (3) schließen nach Art von Umschaltklappen schwenkbare Abteilungselemente (9, 10) an, die über die durch den Käfig verlaufende Längsabtrennung (12) verbunden und gemeinsam betätigbar sind, so daß sie in ihrer einen Schwenkendstellung bei in der Nähe der einen Seitenwand (4) des Fütterungskäfigs liegender Längsabtrennung (12) Ein- und Auslaßtür (5, 6) zu dem einen und in der anderen Schwenkendstellung bei in der Nähe der anderen Seitenwand des Fütterungskäfigs befindlicher Abtrennung (12) Ein- und Auslaßtür zu dem anderen Aufenthaltsbereich (2) freigeben.

## Beschreibung

Die Erfindung betrifft eine Fütterungsanlage für Schweine gemäß dem Oberbegriff des Patentanspruches 1.

Eine derartige Fütterungsanlage ist dem Prinzip nach aus der EP-B-095 214 bekannt. Dabei wird ein Fütterungskäfig verwendet, der im Bereich des einen Endes durch Futtertrog und Futterausgabevorrichtung abgeschlossen ist und sich von diesem Futtertrogbereich in der Draufsicht gesehen trapezförmig verbreitert, so daß zwischen einer bis zum Fütterungskäfig reichenden Trennwand, die die Aufenthaltsbereiche der Tiergruppen trennt, und der Seitenwand, die in diesen Aufenthaltsbereich ragt, Platz für je eine Einlaßtür verbleibt. Zwischen den beiden Einlaßtüren ist die die Form einer Schwenkklappe aufweisende Längsabtrennung gelagert, deren anderes Ende vor dem Futtertrog auf einer kreisbogenförmigen Führungsbahn geführt ist. Ein im Fütterungskäfig befindliches Tier kann, wenn die Einlaßtüren freigegeben bzw. entriegelt werden durch ein vom anderen Aufenthaltsbereich her durch die dort vorhandene Einlaßtür in den Käfig eindringendes Tier, das dabei die Längsabtrennung verschwenkt, aus dem Käfig verdrängt werden. Der grundsätzliche Vorteil einer entsprechenden Fütterungsanlage besteht darin, daß für zwei getrennt zu haltende Tiergruppen nur eine einzige Anlage notwendig ist. Vom Aufbau her hat die bekannte Fütterungsanlage allerdings den entscheidenden Nachteil, daß die Tiere, nachdem sie gefressen haben, den Käfig im Rückwärtsgang verlassen müssen, wobei es häufig zu Angriffen weiterer Tiere gegen dieses während des Verlassens des Käfigs im wesentlichen ungeschützte Tier und auch sonst zu Rangordnungskämpfen kommt. In der Praxis hat sich erwiesen, daß sogenannte Durchlaufkäfige, die Einlaßtür und eine Auslaßtür am anderen Käfigende aufweisen, dem Gruppenverhalten und auch dem Artverhalten der Tiere besser entsprechen, da das Tier den Käfig im Vorwärtsgang sowohl betreten als auch verlassen kann bzw. ein im Käfig befindliches Tier, das von einem nachdrängenden Tier vertrieben wird, artgerecht nach vorne flüchtet.

Bei allen Fütterungsanlagen kann die Steuereinrichtung zusätzlich mit Identifizierungseinrichtungen verbunden sein, welche ein im Durchlaufkäfig befindliches Tier nach dem Gewicht bzw. und/oder nach von ihm getragenen Identifzierungsmarken identifizieren. Nach dieser Identifizierung wird bestimmt, ob das Tier momentan zur Futteraufnahme berechtigt ist, es kann aber auch die Größe der Futterration bestimmt werden. Sperren und Betätigungseinrichtungen für die Türen sollen gewährleisten, daß einerseits ein im Käfig befindliches Tier genügend Zeit zum Fressen hat, anderseits aber nicht zu lange im Durchlaufkäfig verweilt. Es ist auch bekannt, eine an sich für eine Tiergruppe bestimmte Fütterungsanlage zum Selektionieren zu verwenden, wobei dem Ausgang eine als Weiche dienende zusätzliche Tür nachgeordnet ist, die, je nach ihrer Stellung, die Tiere in zwei verschiedene Aufenthaltsbereiche leitet bzw. in der einen Stellung die Rückkehr in den vorigen Aufenthaltsbereich zuläßt und in der anderen Stellung das Tier in einen Aussonderungsbereich leitet.

Aufgabe der Erfindung ist die Schaffung einer Fütterungsanlage der gegenständlichen Art, die unter Vermeidung der Nachteile der bekannten Fütterungseinrichtung eine problemlose und artgerechte Fütterung der Tiere aus zwei Tiergruppen ermöglicht.

Die gestellte Aufgabe wird durch die Merkmale des Patentanspruches 1 gelöst.

Durch die erfindungsgemäße Ausbildung wird es möglich, auch für die Fütterung von zwei Tiergruppen einen, wie oben beschrieben, eine artgerechte Fütterung zulassenden Durchlaufkäfig zu verwenden, der von den Tieren rasch und ohne länger dauernde Anpassungsperioden angenommen wird. Technisch kann die erfindungsgemäße Grundidee auf verschiedene Weise verwirklicht werden. Insbesondere kann man die Trennelemente rein für eine Betätigung durch Tiere der einen oder anderen Gruppe vorsehen, nach einer weiteren Ausbildung die Betätigung durch Zusatzantriebe, die mit Erkennungseinrichtungen kombiniert sein können, unterstützen, eine reine Verstellung durch Zusatzantriebe verwenden oder auch einfach eine Handumschaltung vorsehen, was bedingt, daß zunächst die Tiere der einen Gruppen und dann die Tiere der anderen Gruppe Zugang zum Durchlaufkäfig und damit zur Futterausgabe erhalten. In den meisten Fällen wird man aber die Möglichkeit vorsehen, daß die Tiere der beiden Gruppen unter jeweiliger Umstellung der Absperrung in beliebiger Reihenfolge Zugang zum Durchlaufkäfig haben. Die Ausbildung der Abteilungselemente und der Abtrennungen, die mit ihnen verbunden sind, richtet sich nach der jeweiligen Stalleinrichtung. Im Übergriffsbereich mit der Ein- bzw. Auslaßtür wird man zweckmäßig aus Stangen gebildete Abtrennungselemente vorsehen, wobei die Stangen der Abtrennungen oder Umschaltklappen zwischen den abstandsweise angebrachten Gitterstangen der Ein- und Auslaßtür geführt werden.

Eine Weiterbildung ist in Anspruch 2 angegeben. Der jeweils freigelassene Durchlaufweg im Käfig wird an die Tierbreite angepaßt um zu verhindern, daß zwei Tiere versuchen, nebeneinander in den Käfig zu gelangen. Weitere Einrichtungen können in bei solchen Fütterungsanlagen an sich bekannter Weise verhindern, daß ein auf ein zweites Tier aufreitendes Tier der gleichen Gruppe in den Fütterungskäfig gelangen kann oder daß dann, wenn ein zweites Tier im Käfig ist und die Eingangstür nicht geschlossen ist, eine Futterausgabe erfolgt.

Wenn eine Steuereinrichtung vorhanden ist, dann kann diese, wie in Anspruch 3 angegeben, eingesetzt werden. Die Steuerung kann dabei so ausgelegt sein, daß eine Verstellung der Abtrennung gesperrt bleibt, solange sich ein zur Futteraufnahme berechtigtes Tier innerhalb der vorgegebenen Freßzeit und vorzugsweise geschlossen gehaltener Einlaßtür im Käfig befindet.

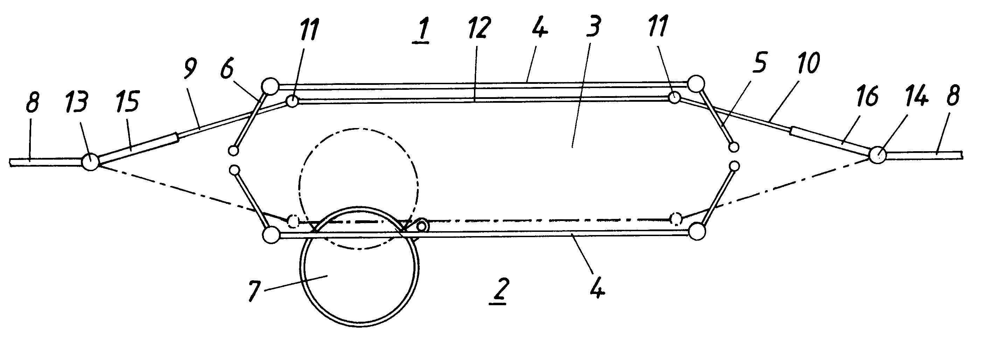

In der Zeichnung ist als Ausführungsbeispiel eine Fütterungsanlage schematisch in Draufsicht dargestellt.

In einem vorgegebenen Bereich eines Stalles werden in zwei nebeneinander befindlichen Aufenthaltsbereichen 1, 2 zwei Tiergruppen gehalten, für die eine gemeinsame Fütterungsanlage 3 vorgesehen ist. Diese Fütterungsanlage besteht aus einem Durchlaufkäfig mit Seitenwänden 4, einer zweiflügeligen Einlaßtür 5, einer entsprechenden Auslaßtür 6 und einem Futtertrog 7, der über eine nicht dargestellte Antriebseinrichtung aus der gezeigten Ruhelage in die strichpunktiert angedeutete Arbeitsstellung verstellbar und über eine Dosiereinrichtung mit einer Futterration beschickbar ist. Beim Ausführungsbeispiel wird angenommen, daß eine nicht dargestellte elektronische Steuereinrichtung vorgesehen wird, welche ein im Käfig befindliches Tier nach von ihm getragenen Identifizierungsmarken über Identifizierungseinrichtungen identifiziert. Ist das jeweilige Tier bei der momentanen Fütterungsperiode zum Futterempfang berechtigt, dann wird die Antriebseinrichtung für den Futtertrog betätigt, so daß dieser in die strichpunktiert dargestellte Arbeitsstellung schwenkt und von einem Futtervorrat her mit der Futterration für das Tier beschickt wird. Gleichzeitig hält eine Antriebseinrichtung für die Eingangstür 5 diese für eine vorbestimmte Zeit in der dargestellten Schließlage. Die Ausgangstür 6 ist nur von innen zu öffnen oder kann ebenfalls über eine Antriebseinrichtung betätigt werden. Nach der vorgegebenen Freßzeit wird der Futtertrog 7 ausgeschwenkt und die Eingangstür 5 geöffnet, zumindest zur Betätigung von außen her freigegeben, so daß das Tier den Käfig über die Auslaßtür 6 verlassen kann.

Die Fütterungsanlage 3 bildet einen Teil einer Abtrennung zwischen den beiden Aufenthaltsbereichen 1 und 2. Weitere feststehende Abtrennungselemente 8 sind mit Abstand von den Türen 5, 6 vorgesehen. An diese Abtrennungselemente 8 schließen schwenkbare Abteilungselemente 9, 10 an, die untereinander über an Gelenken 11 angreifende, durch den Käfig verlaufende, Abtrennungen bildende Wandelemente 12 verbunden sind. Die Abteilungselemente 9, 10 werden aus miteinander ein Gitter bildenden Stangen zusammengesetzt, welche die ebenfalls gitterförmigen Türen 5, 6 durchgreifen und die in ihrer Länge gegen Federn teleskopisch verkürzbar sind. Die Abteilungselemente 9, 10 sind an Schwenkstellen 13, 14 gelagert. In der dargestellten Lage haben nur Tiere der im Aufenthaltsraum 2 befindlichen Gruppe Zutritt zur Fütterungsanlage 3. Befindet sich ein Tier in der Fütterungsanlage wird die Abtrennung 9 bis 12 vorzugsweise in der Momentanlage verriegelt. Ist der Durchlaufkäfig frei, so kann diese Verriegelung aufgehoben werden. Ein gegen das Abteilungselement 10 drückendes Tier aus dem Aufenthaltsbereich 1 kann die Abtrennung 9 bis 12 umstellen, so daß sie sich dann in der strichpunktiert eingezeichneten Lage befindet und dieses Tier Zugang zum Fütterungskäfig hat. Je nach Ausführungsart kann das Tier diese Umstellung unter Überwindung der Kraft der in den Teleskopteilen 15, 16 untergebrachten Federn von sich aus bewerkstelligen oder durch zusätzliche Antriebseinrichtungen für die Abtrennung 9 bis 12 unterstützt werden. Eine Umstellung ist auch über Zeitsteuereinrichtungen bzw. handbetätigte Einrichtungen möglich.

## Patentansprüche

1. Fütterungsanlage für Schweine, mit einem einen Teil einer Abtrennung (8) zwischen den Aufenthaltsbereichen (1, 2) zweier getrennt zu haltender Tiergruppen bildenden, zweitürigen Fütterungskäfig (3), einer einem Futtertrog (7) zugeordneten Futterausgabevorrichtung und einer Steuereinrichtung, die die Futterausgabevorrichtung und vorzugsweise auch Türsperr- oder Betätigungseinrichtungen steuert, so daß ein im Fütterungskäfig (3) befindliches, zum Futterempfang berechtigtes Tier eine Futterration erhält, wobei eine durch den Käfig verlaufende und zwischen den Seitenwänden (4) verstellbare Längsabtrennung (12) die beiden Tiergruppen auch im Käfigbereich trennt und je nach Stellung jeweils einem Tier der einen oder anderen Tiergruppe den Zugang zum Futtertrogbereich freigibt, dadurch gekennzeichnet, daß der jeweils nur ein einziges Tier einer Tiergruppe aufnehmende Fütterungskäfig (3) als Durchlaufkäfig ausgebildet ist, der einen geraden Durchlaufweg zwischen je einer einzigen Ein- und Auslaßtür (5, 6) bestimmt und daß an ihn nach Art von Umschaltklappen schwenkbare Abteilungselemente (9, 10) anschließen, die über die durch den Käfig verlaufende Längsabtrennung (12) verbunden und gemeinsam betätigbar sind, so daß sie in ihrer einen Schwenkendstellung bei in der Nähe der einen Seitenwand (4) des Fütterungskäfigs liegender Längsabtrennung (12) Ein- und Auslaßtür (5, 6) zu dem einen und in der anderen Schwenkendstellung bei in der Nähe der anderen Seitenwand des Fütterungskäfigs befindlicher Abtrennung (12) Ein- und Auslaßtür zu dem anderen Aufenthaltsbereich (2) freigeben.

2. Fütterungsanlage nach Anspruch 1, dadurch gekennzeichnet, daß Übertotpunktgesperre oder Federeinrichtungen (15, 16) vorgesehen sind, welche die Abtrennungselemente (9, 10) und die mit ihnen verbundene Längsabtrennungen (12) des Fütterungskäfigs (3) zwangsweise in eine der beiden Endstellungen leiten.

3. Füttterungsanlage nach den Ansprüchen 1 und 2, dadurch gekennzeichnet, daß die Steuereinrichtungen zusätzliche Antriebs- bzw. Sperrvorrichtungen zum Verstellen und Feststellen der schwenkbaren Abteilungselemente (9, 10) und der mit ihnen verbundenen Abtrennung (12) steuert.
